# EUROPEAN PATENT SPECIFICATION

(11) **EP 1 424 005 B1**
(45) Date of publication and mention of the grant of the patent: **30.11.2005**
(21) Application number: 03015363.9
(22) Date of filing: 08.07.2003
(51) Int. Cl.: A01M 29/00, F23D 14/38, F21L 17/00

(54) **Gas Lamp**
Gaslampe
Lampe à gaz

(30) Priority: 29.11.2002 IT PR20020072
(43) Date of publication of application: 02.06.2004
(73) Proprietor: K Industries S.r.l., 43040 Scarzara (Parma) (IT)
(72) Inventor: Mori, Gabriele, 43045 Fornovo Di Taro, (Parma) (IT)
(74) Representative: Gotra, Stefano

(56) References cited:
- WO-A-01/39809
- FR-A- 2 179 664
- FR-A- 2 537 394
- US-A- 3 721 516
- US-A- 5 902 101
- DATABASE WPI Section Ch, Week 198328 Derwent Publications Ltd., London, GB; Class A32, AN 1983-705951 XP002269305 & DD 159 529 A (DEUTSCHER K), 16 March 1983 (1983-03-16)

## Description

The present invention relates to a gas lamp.

Various types of gas lamps, with different shapes and characteristics, are known.

The sector of particular reference is that of lighting devices in which lighting is obtained from the combustion of a gas contained in a small tank, such as those used for camping stoves.

Currently, more and more widespread use is being made of the so-called ambient lights and step marker lights, particularly appreciated in public locales or in villas to create warm atmospheres or to indicate the way along the access paths to the villa or the locale. During the summer, citronella torches or candles are currently used to keep insects away, but it has not yet been possible to insert citronella, or another insect repellent, into a gas lamp, which would be much more convenient and longer lasting.

The reason for this impossibility stems from the fact that citronella or citronella oil cannot be mixed with butane gas, i.e. with the gas typically used in the tanks described above. An aim of the present invention therefore is to eliminate the aforesaid drawbacks, making available a gas lamp provided with repellent functions against insects and able to emit a particularly warm light.

From US-A-5902101 is known a gas lamp according to the preamble of claim 1.

However in said lamp the combustion is not perfect and an amount of citronella oil rests in the tank after the combustion of gas.

In order to improve the combustion, the tank should be shaked every now and then, but this is not always possible and the user has to remember to shake the tank.

Another aim is to obtain this within the context of a particularly simple and economical solution.

Said aims are fully achieved by the gas lamp of the present invention, which is characterised by the content of the claims set out below.

The lamp has a containment body which preferably extends to cover not only the flame area, but also the whole tank.

The repellent product is citronella oil and, more specifically according to the invention a mixture of citronella oil with ethyl alcohol or with citronella alcohol.

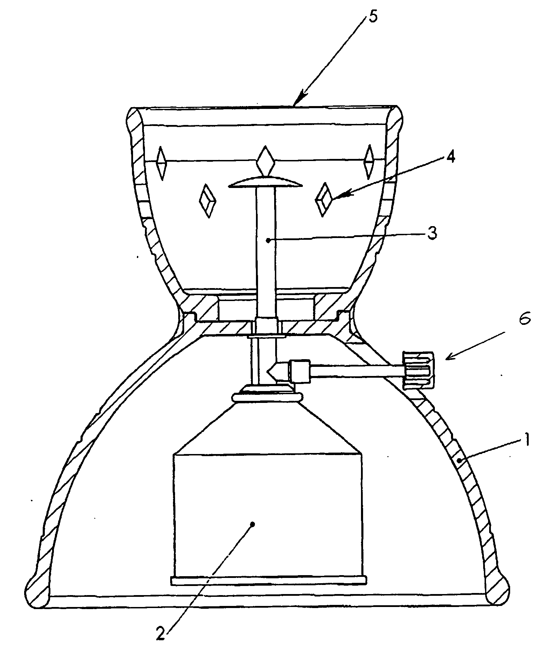

These and other characteristics shall become more readily apparent from ihe following description of a preferred embodiment illustrated, purely by way of non limiting example, in the accompanying drawing table, in which the sole figure shows a sectioned front view of the lamp.

With reference to the figure, the reference number 1 designates a containment body for a tank 2 containing a combustible gas or gas mixture and provided with a burner apparatus 3 for igniting the fuel and producing an illuminating flame.

The burner apparatus 3 is provided with an adjustment valve 6.

The body 1 with the tank 2 and the burner apparatus 3 globally constitute a gas lamp.

The body 1 extends to cover and protect not only the area of the flame but also the whole tank and its shape is akin to that of two semi-spherical caps mutually radiused in correspondence with the junction.

The tank 2 originally contains butane and citronella oil, but more in general and not according to the invention it may contain any mixture of fuel gas with an insect repelling product.

In this particular case, to butane gas is added, in a percentage of about 3-7% of volume (and preferably 4-5%), a mixture formed for 2/3 of its volume by citronella oil and for 1/3 by ethyl alcohol or citronella alcohol.

The Applicant has surprisingly discovered that ethyl alcohol or citronella alcohol constitute intermediate products which enable to mix citronella oil with butane gas, obtaining a combustible mixture which, during combustion and evaporation, emanates a typical aroma and acts as a repellent against insects.

The tank 2 is originally internally coated with a polymer, typically DORE', with protective functions against corrosion, which otherwise could manifest itself due to the presence of citronella-based components.

The body 1 defines in the upper part of its own lateral surface a plurality of shaped openings, which in the illustrated example are rhombus shaped 4, through which light exits creating particular luminous effects in the surrounding areas.

The shaped opening can also be five-pointed stars or round holes or oval openings.

Light mainly exits from a central mouth 5 of the body 1, but in part it also exits from the lateral rhombi.

The flame is originally a yellow non carburised flame at low temperature, i.e. at a temperature preferably of about 500°C.

## Claims

1. Gas lamp, comprising at least a tank (2) containing a combustible gas or gas mixture, to which an insect repellent product containing citronella oil is added a burner apparatus (3) for igniting the fuel and producing a flame, a containment body (1) at least in correspondence with the area in which the flame develops, **characterised in that** the tank (2) contains butane with the addition, in the proportion of 3-7%, in volume terms of a mixture of citronella oil and ethyl alcohol or citronella alcohol.

2. Gas lamp as claimed in claim 1, wherein the containment body (1) extends to cover not only the flame area, but also the whole tank (2).

3. Gas lamp as claimed in claims 1, wherein, citronella oil constitutes 2/3 of the mixture and ethyl alcohol or citronella alcohol constitutes 1/3 of the mixture, in volume terms.

4. Gas lamp as claimed in claim 1, wherein the containment body (1) defines in the upper part of its own lateral surface a plurality of shaped openings through which light exits, creating particular light effects.

5. Gas lamp as claimed in claim 10, wherein said shaped openings are star shaped (4).

6. Gas lamp as claimed in claim 10, wherein said shaped openings have rhomboidal shape.

7. Gas lamp as claimed in claim 1, wherein is a yellow non carburised flame at low temperature, i.e. at a temperature of about 500 °C.

## Patentansprüche

1. Gaslampe, der Art umfassend zumindest eine Flasche (2), die Brenngas oder eine Brenngasmischung, der ein Citronellaöl enthaltendes Insektenschutzmittel beigemischt ist, enthält, einen Brenner (3) zum Zünden des Brennstoffes und Erzeugen einer Flamme, ein Gehäuse (1) zumindest in Höhe des Bereiches, in dem sich die Flamme entwickelt, **dadurch gekennzeichnet, dass** die Flasche (2) Butan enthält, dem eine Mischung aus Citronellaöl und Äthylalkohol oder Citronellaalkohol in einem Verhältnis von 3-7 Vol.% beigemischt ist.

2. Gaslampe nach Anspruch 1, bei der sich das Gehäuse (1) derart erstreckt, dass es nicht nur den Flammenbereich sondern auch die gesamte Flasche (2) abdeckt.

3. Gaslampe nach Anspruch 1, bei der Citronellaöl volumenmässig 2/3 der Mischung und Äthylalkohol oder Citronellaalkohol 1/3 der Mischung ausmachen.

4. Gaslampe nach Anspruch 1, bei der das Gehäuse (1) in dem oberen Bereich seiner Seitenfläche eine Vielzahl profilierter Öffnungen ausbildet, durch die Licht austritt, wobei besondere Lichteffekte entstehen.

5. Gaslampe nach Anspruch 10, bei der die genannten profilierten Öffnungen sternförmig (4) ausgebildet sind.

6. Gaslampe nach Anspruch 10, bei der die genannten Öffnungen rombenförmig ausgebildet sind.

7. Gaslampe nach Anspruch 1 mit einer gelben Flamme mit ausgewogenem Verhältnis zwischen Brenn- und Sauerstoff, die eine niedrige Temperatur, das heisst eine Temperatur von etwa 500°C aufweist.

## Revendications

1. Lampe à gaz, du type comprenant au moins un réservoir (2) contenant un gaz combustible ou un mélange de gaz, auquel est ajouté un produit repoussant les insectes contenant de l'huile de citronelle, un dispositif brûleur (3) pour allumer le combustible et produire une flamme, un corps (1) d'enveloppe au moins en correspondance de la zone dans laquelle la flamme se développe, **caractérisée en ce que** le réservoir (2) contient du butane avec l'addition, dans une proportion de 3-7% en terme de volume, d'un mélange d'huile de citronelle et d'alcool éthylique ou alccol de citronelle.

2. Lampe à gaz selon la revendication 1, dans lequel le corps d'enveloppe (1) s'étend pour couvrir non seulement la zone de la flamme, mais aussi tout le réservoir (2).

3. Lampe à gaz selon la revendication 1, dans lequel l'huile de citronelle constitue les 2/3 du mélange et l'alcool éthylique ou alcool de citronelle constitue 1/3 de la mixture, en terme de volume.

4. Lampe à gaz selon la revendication 1, dans lequel le corps d'enveloppe (1) définit dans la partie supérieure de sa propre surface latérale une pluralité d'ouvertures conformées au travers desquelles la lumière sort, en créant des effets de lumière particuliers.

5. Lampe à gaz selon la revendication 10, dans laquelle lesdites ouvertures conformées ont une forme d'étoile (4) .

6. lampe à gaz selon la revendication 10, dans laquelle lesdites ouvertures conformées ont une forme de losange.

7. lampe à gaz selon la revendication 1, dans laquelle la flamme est une flamme jaune non carburée à basse température, par exemple à une température d'environ 500°C.
